# EUROPEAN PATENT SPECIFICATION

(11) **EP 2 654 133 B1**
(45) Date of publication and mention of the grant of the patent: **27.01.2021**
(21) Application number: 10816437.7
(22) Date of filing: 14.12.2010
(51) Int. Cl.: H02B 7/06, H01R 13/53, H02B 13/00

(54) **CONNECTION DEVICE BETWEEN HIGH-VOLTAGE ELECTRICAL APPARATUSES**
VERBINDUNGSVORRICHTUNG ZWISCHEN ELEKTRISCHE HOCHSPANNUNGSGERÄTEN
DISPOSITIF DE CONNEXION ENTRE DES APPAREILS ÉLECTRIQUES HAUTE TENSION

(43) Date of publication of application: 23.10.2013
(73) Proprietor: Ormazabal Y Cia., S.L.U., 48140 Igorre (Vizcaya) (ES)
(72) Inventor: TORRES NOVALBOS, José, María, 48140 Igorre (Vizcaya) (ES); SEBASTIAN MARTÍN, Sergio, 48140 Igorre (Vizcaya) (ES); AROSTEGUI LEGARRETA, Joseba, 48140 Igorre (Vizcaya) (ES)
(74) Representative: Carpintero Lopez, Francisco
(86) International application number: PCT/ES2010/070823
(87) International publication number: WO 2012/080522

(56) References cited:
- EP-A1- 1 339 145
- WO-A1-2010/111808
- WO-A2-2008/116090
- DE-T2- 69 834 155

## Description

### Object of the Invention

The present invention relates to a connection device allowing the electric connection between the busbar of first electrical equipment and second electrical equipment, both of them being able to be insulated in a solid medium or a fluid medium, such as a gas or a liquid for example, comprising said electric connection at least one aerial point of connection with the second electrical equipment, said connection device being provided with a connector which is housed by plug-in in respective female type bushings provided for such purpose in the first electrical equipment, maintaining at all times the tightness of the coupling both mechanically and electrically, thus preventing the insulating fluid from being lost in the operation of coupling electrical equipment on-site.

### Background of the Invention

As is known, high-voltage electrical equipment such as for example transformers, cell, etc., can comprise electrical devices, such as for examples, switches, disconnectors, fuses, measuring equipment, etc. This high-voltage equipment can usually use a gas, such as air or SF₆ for example, a liquid or a solid medium as an insulating medium. It is also known that the dielectric strength of the gas is greater than that of air, so the distances between phases in gas-insulated equipment are smaller than in air-insulated equipment, and consequently the dimensions of air-insulated equipment are larger.

High-voltage electrical equipment is occasionally modular cells and transformers which in electric installations, such as electric distribution or transformer substations for example, in the case of cells, the latter can be installed side by side, such that the electric coupling therebetween is performed by means of connection devices allowing the wall-to-wall binding of cells.

Said electric coupling is performed through the side walls of the cells, having for such purpose respective female type bushings previously assembled on the corresponding cell, specifically three female type bushings in the case of a three-phase system, the three female type bushings of one and the same cell being coupled by means of a three-phase metal sheet acting as a shield and reducing the electric field through the female type bushings themselves, preventing the concentration of said field at the edges. Said metal sheet is embedded in the female type bushings made of epoxy resin, being coupled thereto in the actual process for molding them, being fixed to the cell by means of welding along the entire perimeter thereof. In other cases, these female type bushings are separately inserted in their respective holes made in at least one wall of the cell, finally fixing them to said wall by means of screws.

Said female type bushings are also occasionally used in the connection between a cell and a transformer, at least one of said pieces of electrical equipment comprising in this case said female type bushings previously assembled to the electric connection therebetween, being able to be assembled in at least one wall of the cell and/or in the upper lid or in at least one wall of the transformer. Patent document WO2004012312A1, for example, defines this type of connection.

The assembly of the female type bushings in the cells or in the transformer is an operation prior to the gas pressurization of said cell or to the filling with oil of the transformers, such that the on-site cell-cell or cell-transformer coupling simply entails the operation of placing the pieces of electrical equipment side by side and electrically connecting them by plugging them in by means of the connection device.

In this sense, examples can be mentioned which define connection devices for the cell-cell or cell-transformer coupling, such as for example WO0235668A1, ES2072177B1, ES2037590B1, ES2222809B1, EP1577994A1, WO2008087117-A2, etc., in which the electrical equipment compartments must be tight due to their insulating medium.

Thus, by means of the solutions of connection devices between electrical equipment insulated in a fluid medium, such as a gas or a liquid for example, such as those shown in the previous patent examples, the installation of cells and transformers in a modular manner is allowed and, furthermore, performing the on-site binding/unbinding of electrical equipment is allowed, without this entailing the loss of the insulating medium contained in said electrical equipment or the disconnection of said electrical equipment from the electric network.

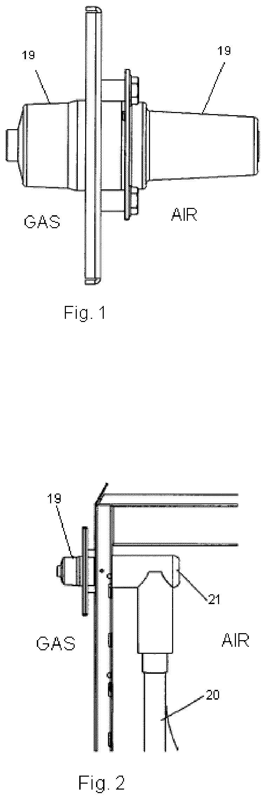

When the electric coupling between electrical equipment entails an electric connection with at least one aerial point of connection, such as for example between a gas-insulated protection cell and an air-insulated measuring cell, due to the difference of the insulating medium used in each of them, the use of a particular connection device is necessary to assure the insulation requirements of the two cells. In this sense, the connection device or means used usually consists of a shielded cable connector which is connected to the male type bushing previously installed in the gas-insulated cell, as shown in Figure 2. Said system allows a secure (insulated and shielded) connection of a cable to a cell. Therefore, said connection system comprises for each phase a male type bushing (19) forming part of the gas-insulated cell, a cable (20) and a connector (21). The male type bushing (19) is embedded in a side wall of the cell with a portion in gas and the other portion in air, as shown in Figure 1. Said male type bushing (19) is pressurized with the side wall of the gas-insulated cell by means of a tight gasket. The solid insulation of the cable (20) and the connector (21) provide the required insulation resistance of the air-insulated cell.

Documents EP1160945A1, US2009159568A1, WO02101896A2, EP1160946A1, etc., which define gas-insulated cells comprising a connection by means of a shielded cable connector for the coupling between gas-insulated equipment and air-insulated equipment, can be mentioned as an example of this type of connection.

This type of connection by means of a shielded cable connector entails the following drawbacks:
- Air-insulated cells need a larger amount of space due to the fact that radius of curvature of the cables is very large. The larger the section of the cable, the larger said radius of curvature is, so the dimensions of the air-insulated cells are larger. In short, the use of this type of connection involves a large amount of space.
- The cable terminals used in high voltage are very expensive, so said connections increase the total cost of the installations.
- The assembly tasks are complicated and this can entail the performance of poor connections which can then negatively affect both the electrical equipment themselves and the operators.
- The execution times of assembly tasks, maintenance tasks, etc. involve a longer time.

In this sense, there are solutions such as those defined in documents WO2010111808A1 and ES2311605T3 for example, in which this type of connection (shielded cable connector) is substituted with another type of connection.

Patent ES2311605T3 relates to a busbar connection of a gas-insulated cell with an air-insulated measuring cell. The wall of the gas-insulated cell and the wall of the air-insulated cell are located side by side. The wall of the gas-insulated cell comprises a female type bushing for each phase, in which, when the cells are connected, there is housed a sealing body (of silicone rubber) comprising a (partially embedded) connecting contact and a round conductor, this sealing body being located in the portion of the measuring cell, and therefore in an insulating medium which is air. The connecting contact comprises a borehole for housing the round conductor and said connecting contact is coupled with said conductor by means of setscrews. Once the connection between the gas-insulated cell and the air-insulated cell has been performed, part of the connecting contact not embedded in the sealing body is housed inside a contact part which forms part of the female type bushing of the gas-insulated cell. This contact part for housing the sealing body is semicircular and the sealing body is configured in a manner complementary with a spherical gap. The sealing body is formed on the side of the air-insulated cell, such that its shape forms together with an outer conductive coating a field control profile comparable with a board profile. The field control profile is configured such that the length of the sealing body on the side of the air-insulated measuring cell comprises three length sections with approximately the same length.

In short, both the female type bushing and the sealing body housed therein comprise a particular geometric configuration, for the purpose of obtaining an electric field control assuring the exclusion of unwanted electric discharges. This cell connection system can entail the drawback that the addition of measuring cells or another type of air-insulated cells in already existing installations which do not have gas-insulated cells with female type bushings of this type involves the need to modify the gas-insulated cells to which they are to be coupled, which entails the substitution of the cells existing in the installations or the modification thereof, entailing in both cases tasks of disassembly and assembly, transport of the cells to the factory, the draining and subsequent filling the cells with gas, etc., all this entailing a considerable execution time, as well as a high cost.

Patent application WO2010111808A1 relates to another type of cell connection, in which the connection device consists of an insulator comprising a portion which is coupled to a gas-insulated cell and another portion which is coupled to an air-insulated cell. Said insulator forms part of the gas-insulated cell, such that the gas-insulated cell does not comprise any female type bushing but rather the insulator itself in its entirety is assembled in the factory prior to the gas pressurization of the cell. Therefore, the insulator or connection device is not an element independent from the cells to be coupled. This feature, in the event of an extension of an existing cell installation entails the drawback that the gas-insulated cells to be coupled with a new air-insulated cell have to be modified and adapted for this type of connection, entailing the transfer of said cells to the factory to provide them with said connection device, the draining/filling with gas, etc., all this entailing a long time for the reestablishment of the installation, as well as a high cost.

The other side of the insulator or connection device comprises a cavity with a diameter decreasing towards the central portion of the insulator, adapted for housing an insulated bar allowing the connection of the air-insulated cell with a conductive bar embedded in the insulator, which is in turn connected with the gas-insulated cell. Likewise, the coupling of said conductive bar with the gas-insulated cell is performed by means of an intermediate part housed inside the gas-insulated cell and screwed to said embedded conductive bar, said intermediate part being provided with a tulip contact for its connection with the busbar of the gas-insulated cell. The conductive bar embedded in the insulator is coupled with the insulated bar housed in the cavity of said insulator by means of a tulip contact, this contact being fixed to the conductive bar through a bolt.

The insulated bar (housed in the cavity) is fixed to the insulator or connection device by means of a fixing profile made of insulating material, which is screwed to the insulator itself, such that the insulated bar remains centered and fixed in the cavity, preventing mechanical stresses which can damage the electric connection between said insulated bar and the conductive bar embedded in the insulator.

Patent application WO2008/116090A2 relates to cable connectors for electric power systems, and more particularly to separable insulated loadbreak connector systems for use with cable distribution systems.

European patent application EP1339145A1 relates to an interconnection assembly for electrical switchgear cells, and more specifically, to a system for coupling electrical switchgear cells or modules able to be used in electrical distribution and transformation centres, employing in the coupling or interconnection between the cells an independent connector element.

German patent application DE69834155T2 relates to an electrical connection having an insulating sleeve enclosing a contact made up of three parts: a rigid central block with ball joints at either end attaching two contact jaws.

### Description of the Invention

For the purpose of solving the aforementioned problems, the present invention proposes a connection device according to claim 1. This connection device allows performing the electric coupling between first and second electrical equipment insulated in a solid medium or in a fluid medium (gas or liquid), the coupling being able to be performed for example between cell-cell or cell-transformer, said electric connection comprising at least one aerial point of connection. The connection device is configured to be able to be tightly introduced through a first end in a (female type) coupling bushing arranged in at least one wall of the first electrical equipment and in correspondence with conductive terminals of said first electrical equipment, such as a transformer or a cell for example, such that the electric coupling between the connection device and said first electrical equipment is performed by plug-in, assuring a tight connection both mechanically and electrically, thus preventing, in the operation of coupling between electrical equipment on-site, the insulating fluid from being lost or the equipment from having to be substituted or modified for the purpose of adapting such equipment for the electric coupling which entails at least one aerial point of connection.

Therefore, said connection device independent from the electrical equipment to be coupled enables the on-site execution of a direct and quick electric connection/disconnection between electrical equipment, said connection device being able to be coupled to standard equipment, i.e., electrical equipment comprising in at least one of the walls thereof at least one female type coupling bushing or female connector. Likewise, the use of shielded cable connectors is prevented and, therefore, the dimensions of the electrical equipment, the costs due to not using cable terminals, the equipment assembly/disassembly times, etc., are reduced.

This plug-in electric coupling is performed by means of a connector which forms part of the connection device and which is configured to be connected to the conductive terminals of the first electrical equipment when the first end of the connection device is coupled in the mentioned coupling bushing.

The connection device comprises an elongated body, made of insulating and elastic material, the first end of which is tightly coupled in the mentioned female type bushings. This elongated body formed in an elastic material, such as silicone for example, allows a high deformation capacity to adapt it to the respective female type bushings, although the latter are offset in terms of their position, thus assuring an optimal mechanical tightness between the body and the female type bushings of the electrical equipment.

The mentioned connector is encapsulated inside said elongated body in correspondence with the mentioned first end, which connector comprises at least one conductive part allowing a plug-in type electric connection between the connection device and the conductive terminal housed in the female type bushings, said conductive terminal being in contact with said at least one conductive part inside the elongated body.

The conductive parts are assembled inside the elongated body, with the possibility of pivoting with respect to the elongated body so that said conductive parts can move axially to be coupled on the conductive terminals provided inside the female type bushings, even when they are misaligned. The conductive parts are tightened against the conductive terminals by means of at least one spring, assuring a suitable electrical contact between said terminals and the conductive parts.

The second end of the elongated body is coupled to second electrical equipment, such as for example a cell, a transformer, measuring equipment, etc., in which the point of connection between said second equipment and the connection device is aerial. The elongated body comprises, encapsulated at least partially therein, a conductor having a first end connected to the mentioned connector (for coupling to the terminals of the first electrical equipment) and a second end which can be electrically connected to the second electrical equipment, the aforementioned aerial point of connection being established. The connection device thus allows performing a secure electric connection between the first electrical equipment and the second electrical equipment, establishing therebetween at least one aerial point of connection. Given its elastic characteristic, said elongated body is flexible and therefore enables it to be installed with an angle of curvature, determined by the conductor which is connected to the second electrical equipment. The first end of this conductor is encapsulated inside the elongated body and plugged into the connector, preventing the use of fixing profiles, such that it is in electrical contact with the conductive parts of the mentioned connector. Likewise, this conductor encapsulated partially in the elongated body can comprise an insulating cover. The possibility of said conductor being able to be rigid or being able to be flexible, such as a cable for example, has been envisaged.

For the purpose of controlling the electric field, the elongated body can internally comprise (on its inner face) a conductive coating applied at least on the same surface occupied by the connector, and in contact with the latter. This way, any air gap which can be located inside the elongated body is electrically shielded, so it is not subjected to any electric field which may generate the inception of partial discharges. Likewise, said elongated body can comprise on its outer face the same conductive coating, applied partially on the surface of the connection device which is exposed to the air and outside the electrical equipment to be coupled, specifically on the surface located between the inlet opening of the female type bushings and at least one grounded flange, said flange being in contact with said outer conductive coating. The possibility of the elongated body being able to comprise, both internally and externally, at least one conductive portion, which is a conductor overinjected on the elongated body, has also been envisaged.

The connection device can comprise at least one grounded flange which allows balancing the electric field and at the same time establishing a mechanical coupling between the first electrical equipment and the connection device (the mechanical coupling can be performed, for example, by means of screws between the flange and the wall or lid of the first electrical equipment). This flange is in contact with the outer conductive coating of the elongated body, such that any air gap which can be located between said flange and the elongated body is completely shielded electrically. The possibility of said flange being able to be at least partially encapsulated in the elongated body and in contact with the outer conductive coating of the elongated body and with the outer conductive portion overinjected on the elongated body has been envisaged.

At the second end of the elongated body which is coupled to the second electrical equipment, there is externally arranged a plurality of fins which allow extending the surface creepage distance of the connection device, the number of fins used and the design thereof being according to the range of the installation voltage and to the environment (salinity, pollution, etc.) in which the connection device is to be installed.

Likewise, the possibility of the connection device being able to comprise at least one measuring device, such as a current sensor and/or a voltage sensor for example, has been envisaged.

### Description of the Drawings

To complement the description and for the purpose of aiding to better understand the features of the invention according to a preferred practical embodiment thereof, a set of figures is attached as an integral part of said description in which the following has been depicted with an illustrative and non-limiting character:
Figure 1 shows the state of the art relating to a male type bushing (19) which is embedded in a side wall of a cell, said bushing (19) comprising a portion in gas and the other portion in air.
Figure 2 shows the connection device or means used in the state of the art, consisting of a shielded cable connector which is connected to the male type bushing (19) previously installed in the gas-insulated cell and which comprises for each phase a bushing (19) forming part of the gas-insulated cell, a cable (20) and a connector (21).
Figure 3 shows a sectional view of a first embodiment of the connection device (10) object of the invention, said device (10) comprising a connector (1) and a conductor (5) encapsulated in an elongated body (7), in which the flange (11) is outside the elongated body (7).
Figure 4 shows a sectional view of a second embodiment of the connection device (10) object of the invention, said device (10) comprising a connector (1) and a conductor (5) encapsulated in an elongated body (7), in which the flange (11) is partially embedded in the elongated body (7).
Figure 5 shows a sectional view of the elongated body (7) relating to the first embodiment of the invention, in which said body (7) partially comprises an outer conductive coating (16) and inner conductive coating (15) for the control of the electric field.
Figure 6 shows a sectional view of the elongated body (7) relating to the second embodiment of the invention, in which said elongated body (7) partially comprises an outer conductive coating (16) and inner conductive coating (15) for the control of the electric field.
Figure 7 shows a detail of a sectional view of a portion of the connection device (10), in which it is observed that the inner air gap (23) located between the elongated body (7) and the insulating cover (18) is provided with an inner conductive coating (15) applied on the inner face of the elongated body (7).
Figure 8 shows an exploded perspective view corresponding to a possible embodiment of the connector (1), in which the exploded view shows a ring (9), metal tubes (13), conductive parts (8) and springs (14).
Figure 9 shows a perspective view of a connection between first electrical equipment, such as a cell (3) for example, and second electrical equipment, such as a transformer (6) for example, using to that end the connection device (10) object of the invention.
Figure 10 shows a perspective view of another embodiment of the connection between electrical equipment, in which the first electrical equipment (3) is a transformer comprising female type bushings (2) in which the connection device (10) is coupled by plug-in.
Figure 11 shows a sectional view of a third embodiment of the connection device (10) object of the invention, said device (10) comprising a connector (1) and a conductor (5) encapsulated in an elongated body (7), in which the flange (11) is located outside the elongated body (7), said elongated body (7) comprising at least one outer conductive portion (25) and at least one inner conductive portion (26).
Figure 12 shows a sectional view of the elongated body (7) relating to the third embodiment of the connection device (10), in which said body (7) comprises at least one outer conductive portion (25) and at least one inner conductive portion (26).
Figure 13 shows a perspective view of a connection between first electrical equipment, such as a cell (3) for example, and a second electrical equipment, such as measuring equipment (6) for example, using to that end the connection device (10) object of the invention.

### Preferred Embodiment of the Invention

An embodiment of a connection device (10) between first high-voltage electrical equipment (3) and second high-voltage electrical equipment (6) is set forth below as an illustrative and non-limiting example, said electrical equipment (3, 6) can be, for example, cell-cell, cell-transformer or combinations thereof.

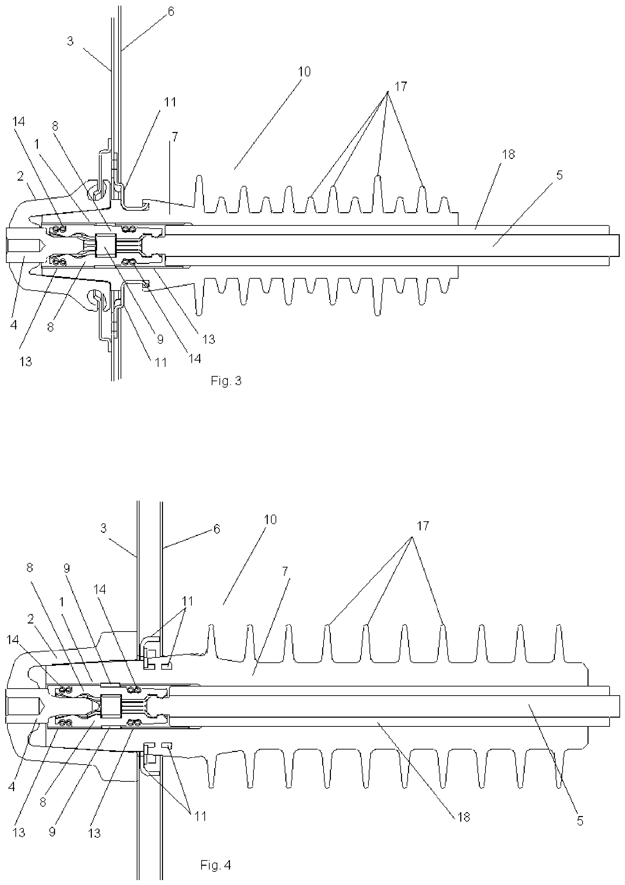

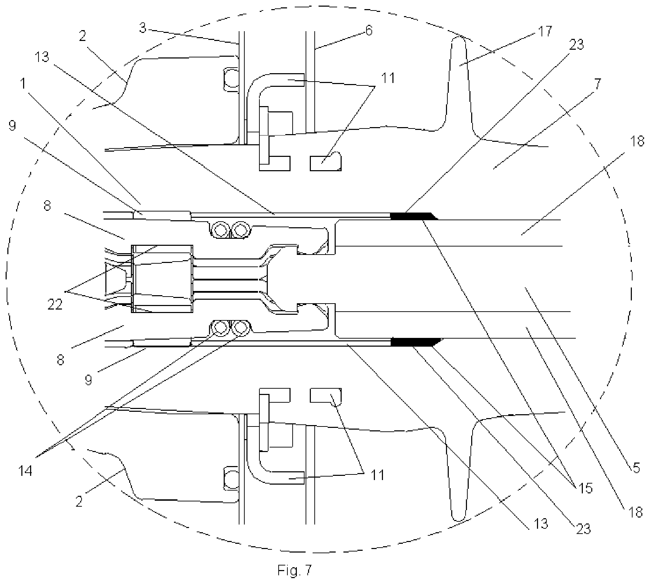

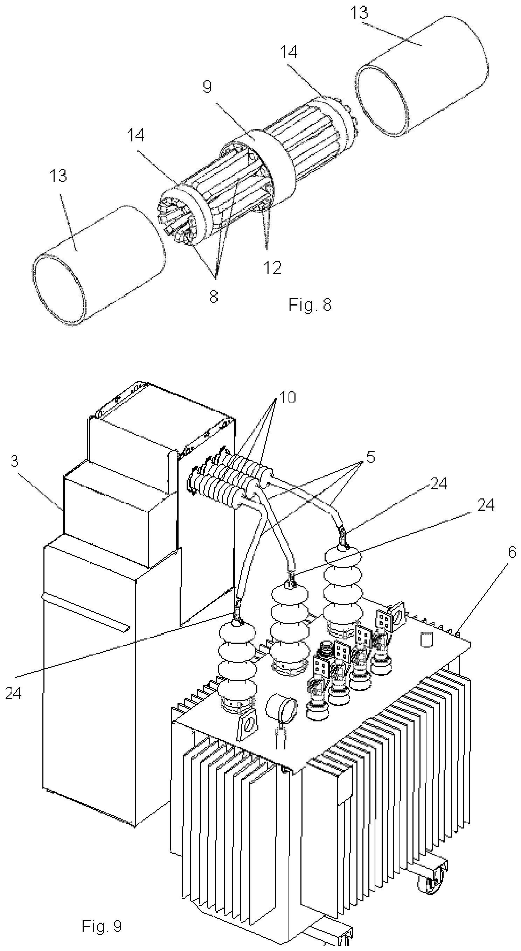

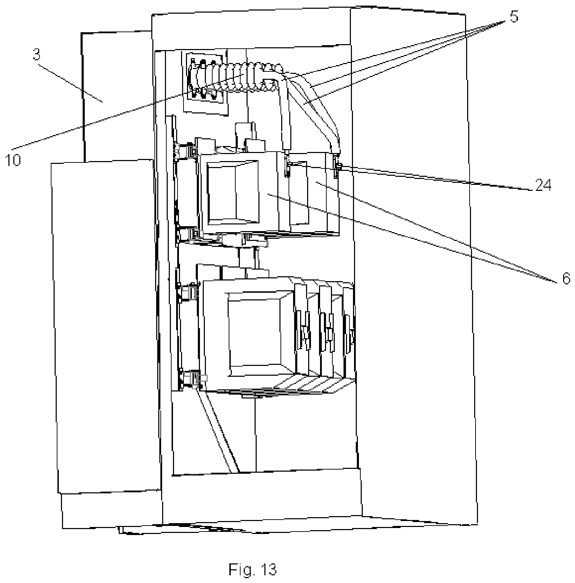

As can be seen in Figures 3 to 13, the connection device (10) independent from the electrical equipment (3, 6) to be coupled comprises an insulating and elastic elongated body (7). At a first end, said elongated body (7) comprises encapsulated therein a connector (1), the first end being configured to be able to be introduced, at least partially, in female type coupling bushings (2) previously fixed in at least one of the walls or lid of the first electrical equipment (3), in correspondence with the conductive terminals (4) of said first equipment (3). The coupling of the first end causes the electric coupling of the connector (1) with the conductive terminals (4) of the first electrical equipment (3).

As shown in Figures 3, 4, 8 and 11, the connector (1) comprises a pair of metal tubes (13) between which there is positioned a conductive ring (9) provided with a plurality of radial passages (12), such that in each of such passages there is housed a conductive part (8), like a finger, all this such that the outer diameter of the mentioned ring (9) coincides with the inner diameter of the elongated body (7), the ring (9) being fitted inside the elongated body (7), whereby the package formed by the different conductive parts (8) housed and positioned in the passages (12) of the ring (9) is secured inside the elongated body (7) precisely as a result of the contact between the ring (9) and the inner surface of the body (7), but with the possibility of the conductive parts (8) pivoting with respect to the body (7) so that the assembly of such parts can move axially and be coupled by plug-in on the conductive terminals (4) located inside the coupling bushings (2), even when the latter are not aligned.

The conductive parts (8) are provided with a central recess (22) determining a loose housing of each conductive part (8) in the corresponding passage (12) of the ring (9), and thus allowing the axial movement of those parts (8) when the connector (1) is coupled on the corresponding terminals (4) and even a pivoting thereof when the terminals (4) are misaligned.

Likewise, at least one spring (14) is perimetrically assembled on the end portions of the conductive parts (8), which spring tightens the package of conductive parts (8) against the metal ring (9), preventing the movement in a longitudinal direction and the corresponding extraction of said conductive parts (8), as well as against the terminals (4), assuring a suitable electrical contact between said terminals (4) and the conductive parts (8), as can be observed in Figures 3, 4 and 8.

In relation to the metal tubes (13) internally incorporated in the elongated body (7), they are provided to give the elongated body (7) a certain rigidity which assures a good sealing against the coupling bushing (2).

As shown in Figures 3, 4, 9 and 13, the second end of the elongated body (7) is coupled to the second electrical equipment (6) and, to that end, said elongated body (7) comprises, encapsulated partially therein, at least one conductor (5) which at a second end is electrically connected with said equipment (6), establishing at least one aerial point of connection (24). A first end of this conductor (5) is encapsulated inside the elongated body (7) and plugged into the connector (1), such that it is in electrical contact and surrounded by the conductive parts (8) of the mentioned connector (1). Likewise, this conductor (5) comprises an insulating cover (18). The possibility of said conductor (5) being able to be rigid or flexible, such as a cable for example, has been envisaged.

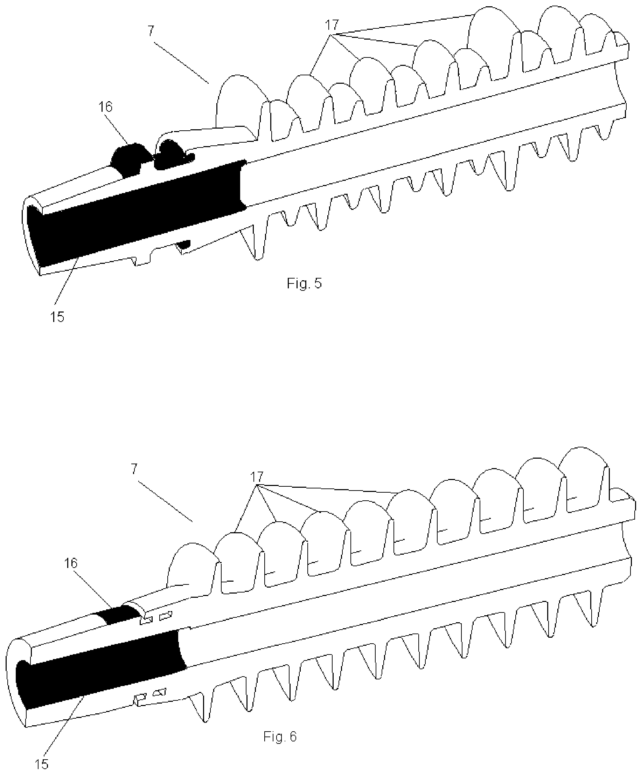

In Figures 5 to 7 it can be observed that the elongated body (7) internally comprises a conductive coating (15) applied at least on the same surface occupied by the connector (1) and in contact with the latter. Therefore, any air gap (23) which can be located inside the elongated body (7) is electrically shielded, so it is not subjected to any electric field which may generate the inception of partial discharges. Likewise, on its outer face it comprises the same conductive coating (16) applied partially on the surface of the connection device (10) which is exposed to the air and outside the electrical equipment (3, 6).

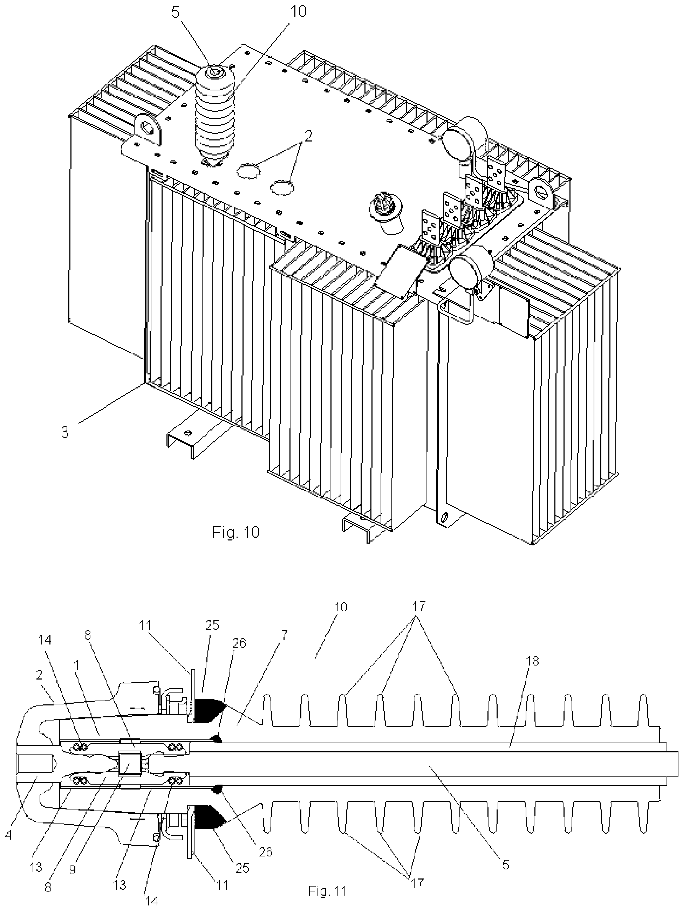

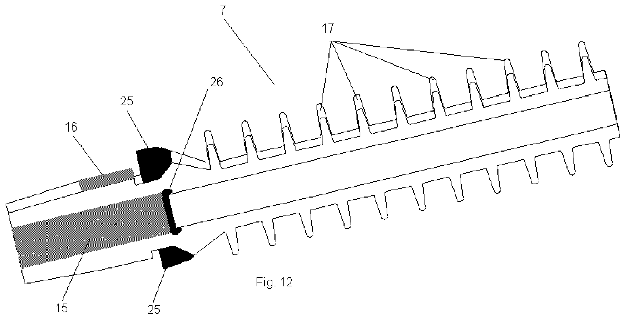

Figures 11 and 12 show another possible embodiment of the elongated body (7), in which said body (7) comprises at least one outer conductive portion (25) and at least one inner conductive portion (26), these portions (25, 26) being obtained by means of a conductor overinjection on the same elongated body (7). Therefore, any air gap (23) which can be located inside the elongated body (7) is electrically shielded, so it is not subjected to any electric field which may generate the inception of partial discharges. The outer conductive portion (25) is in contact with at least one flange (11), such that said flange (11) is housed between said outer conductive portion (25) (being able to be in contact with said portion (25) or encapsulated partially in said portion (25)) and the outer conductive coating (16), the flange (11) also being in contact with said coating (16). The inner conductive portion (26) is in contact with the connector (1) and with the conductor (5).

The connection device (10) comprises at least one grounded flange (11) which allows balancing the electric field and at the same time establishing a mechanical coupling between the electrical equipment (3) and the connection device (10). This flange (11) can be at least partially encapsulated in the elongated body (7), as shown in Figure 4, and in contact with the outer conductive coating (16) of the body (7) and with the outer conductive portion (25). In another different embodiment of the connection device (10), as shown in Figure 3 or in Figure 11, said flange (11) can be outside the elongated body (7) and can be located on the outer conductive coating (16) and in contact with the conductive portion (25) of the elongated body (7). Any air gap which can be located between said flange (11) and the elongated body (7) is thus completely shielded electrically.

At the end of the elongated body (7) which is coupled to the electrical equipment (6), there is externally arranged a plurality of fins (17) which allow extending the surface creepage distance of the connection device (10).

In summary, the reference numbers used in this text and indicated in the mentioned figures represent the following components of the invention:
- 1.-: Connector
- 2.-: Coupling bushing
- 3.-: First electrical equipment
- 4.-: Conductive terminals
- 5.-: Conductor
- 6.-: Second electrical equipment
- 7.-: Elongated body
- 8.-: Conductive parts
- 9.-: Ring
- 10.-: Connection device
- 11.-: Flange
- 12.-: Passages of the ring (9)
- 13.-: Metal tubes
- 14.-: Spring
- 15.-: Inner conductive coating
- 16.-: Outer conductive coating
- 17.-: Fins
- 18.-: Insulating cover
- 19.-: Male type bushing (state of the art)
- 20.-: Cable (state of the art)
- 21.-: Shielded cable connector (state of the art)
- 22.-: Central recess of the conductive parts (8)
- 23.- Air: gap
- 24.-: Aerial point of connection
- 25.-: Outer conductive portion of the elongated body (7)
- 26.-: Inner conductive portion of the elongated body (7)

## Claims

1. Connection device (10) between high-voltage electrical equipment, applicable between first electrical equipment (3) and second electrical equipment (6) insulated in a fluid medium or in a solid medium, the first electrical equipment (3) comprising at least one female coupling bushing (2) in correspondence with conductive terminals (4) of the first electrical equipment such that the electric coupling between the connection device (10) and said first electrical equipment (3) is performed by plug-in, the connection device (10) being independent from the electrical equipment to be coupled, wherein the connection device (10) comprises:
- an elongated body (7) made of insulating and elastic material, with a first end configured to be tightly coupled in the at least one coupling bushing (2) of the first electrical equipment (3),
- a connector (1) encapsulated in the elongated body (7), in correspondence with the first end of the elongated body and configured to be connected to the conductive terminals (4) of the coupling bushing (2), when the first end of the elongated body is coupled in the at least one female coupling bushing (2) of the first electrical equipment (3);
- a conductor (5) encapsulated at least partially in the elongated body (7), having a first end which is connected to the connector (1) and a second end suitable for connecting the second electrical equipment (6), establishing at least one aerial point of connection (24),
wherein the connector (1) comprises a plurality of conductive parts (8), such that the electric connection between said conductive parts (8) and conductive terminals (4) is of the plug-in type, this electric connection being inside the elongated body (7), and wherein the first end of the conductor (5) is encapsulated inside the elongated body (7) and plugged into the connector (1), such that it is in electrical contact and surrounded by the conductive parts (8) of the connector (1), establishing a second electric point of connection inside the elongated body (7) of the connection device (10).

2. Connection device (10) according to claim 1, wherein the connection device (10) comprises at least one flange (11) for mechanical coupling between the first electrical equipment (3) and the connection device (10), the mentioned flange (11) being grounded to allow distributing the electric field.

3. Connection device (10) according to any of the previous claims, wherein the elongated body (7) comprises on its inner face an inner conductive coating (15), the mentioned inner conductive coating (15) being applied at least on the same surface occupied by the connector (1) and in contact with the latter.

4. Connection device (10) according to claim 3, wherein the elongated body (7) comprises on its outer face the same conductive coating (16), the mentioned conductive coating (16) being partially applied on the surface of the connection device (10), which is exposed to the air and outside the electrical equipment (3, 6), between the inlet opening of the coupling bushing (2) and at least one grounded flange (11), said flange (11) being in contact with said conductive coating (16).

5. Connection device (10) according to any of the previous claims, wherein the elongated body (7) comprises at least one inner conductive portion (26) and at least one outer conductive portion (25).

6. Connection device (10) according to any of claims 2 or 4, wherein the flange (11) is at least partially encapsulated in the elongated body (7).

7. Connection device (10) according to any of the previous claims, comprising a current sensor.

8. Connection device (10) according to any of the previous claims, comprising a voltage sensor.

9. Connection device (10) according to any of the previous claims, wherein the elongated body (7) externally comprises a plurality of fins (17) on the side opposite the connector (1) in which the insulating medium is air.

10. Connection device (10) according to any of the previous claims, wherein a portion of the conductor (5) is in electrical contact with at least one conductive part (8) inside the elongated body (7).

11. Connection device (10) according to any of the previous claims, wherein the conductor (5) is protected by an insulating cover (18).

12. Connection device (10) according to any of the previous claims wherein the conductor (5) is rigid.

13. Connection device (10) according to any of the previous claims, wherein the electrical equipment (3, 6) can be cell-cell, cell-transformer or combinations thereof.

14. Connection device (10) according to any of the previous claims, wherein the elongated body (7) is made of silicone.

## Patentansprüche

1. Verbindungsvorrichtung (10) zwischen elektrischen Hochspannungsgeräten, anwendbar zwischen einem ersten elektrischen Gerät (3) und einem zweiten elektrischen Gerät (6) isoliert in einem flüssigen Medium oder in einem festen Medium, das erste elektrische Gerät (3) umfassend mindestens eine weibliche Kupplungsbuchse (2) in Verbindung mit leitenden Anschlüssen (4) des ersten elektrischen Geräts, so dass die elektrische Kopplung zwischen der Verbindungsvorrichtung (10) und dem ersten elektrischen Gerät (3) durch Einstecken ausgeführt wird, wobei die Verbindungsvorrichtung (10) unabhängig von den zu koppelnden elektrischen Geräten ist, wobei die Verbindungsvorrichtung (10) umfasst:
- einen länglichen Körper (7) aus isolierendem und elastischem Material, mit einem ersten Ende, das konfiguriert ist, dass es fest mit der mindestens einen Kupplungsbuchse (2) des ersten elektrischen Geräts (3) koppelbar ist,
- einen Verbinder (1), der in den länglichen Körper (7) eingekapselt ist, in Verbindung mit dem ersten Ende des länglichen Körpers und so konfiguriert, dass er mit den leitenden Anschlüssen (4) der Kupplungsbuchse (2) verbindbar ist, wenn das erste Ende des länglichen Körpers mit der mindestens einen weiblichen Kupplungsbuchse (2) des ersten elektrischen Geräts (3) gekoppelt ist,
- einen Leiter (5), der zumindest teilweise in dem länglichen Körper (7) eingekapselt ist, aufweisend ein erstes Ende, das mit dem Verbinder (1) verbunden ist, und ein zweites Ende, das geeignet zum Verbinden mit dem zweiten elektrischen Gerät (6) ist, bereitstellend mindestens einen Antennenanschlusspunkt (24),
wobei der Verbinder (1) eine Vielzahl von leitenden Teilen (8) umfasst, so dass die elektrische Verbindung zwischen den leitenden Teilen (8) und leitenden Anschlüssen (4) in der Einsteck-Bauart ist, wobei diese elektrische Verbindung innerhalb des länglichen Körpers (7) angeordnet ist,
und wobei das erste Ende des Leiters (5) innerhalb des länglichen Körpers (7) eingekapselt und in den Verbinder (1) eingesteckt ist, so dass es in elektrischem Kontakt mit den und umgeben von den leitenden Teilen (8) des Verbinders (1) ist, bereitstellend einen zweiten elektrischen Verbindungspunkt innerhalb des länglichen Körpers (7) der Verbindungsvorrichtung (10).

2. Verbindungsvorrichtung (10) nach Anspruch 1, wobei die Verbindungsvorrichtung (10) mindestens einen Flansch (11) zur mechanischen Kopplung zwischen dem ersten elektrischen Gerät (3) und der Verbindungsvorrichtung (10) umfasst, wobei dieser Flansch (11) geerdet ist, um die Verteilung des elektrischen Feldes zu ermöglichen.

3. Verbindungsvorrichtung (10) nach einem der vorhergehenden Ansprüche, wobei der längliche Körper (7) auf seiner Innenfläche eine innere leitende Beschichtung (15) aufweist, wobei diese innere leitende Beschichtung (15) mindestens auf der gleichen Fläche aufgebracht ist, die von dem Verbinder (1) eingenommen wird und mit diesem in Kontakt steht.

4. Verbindungsvorrichtung (10) nach Anspruch 3, wobei der längliche Körper (7) auf seiner Außenseite die gleiche leitende Beschichtung (16) aufweist, wobei diese leitende Beschichtung (16) teilweise auf der Oberfläche der Verbindungsvorrichtung (10), die der Luft ausgesetzt und außerhalb der elektrischen Ausrüstung (3, 6) ist, zwischen der Einlassöffnung der Kupplungsbuchse (2) und mindestens einem geerdeten Flansch (11) aufgebracht ist, wobei der Flansch (11) in Kontakt mit der leitende Beschichtung (16).

5. Verbindungsvorrichtung (10) nach einem der vorhergehenden Ansprüche, wobei der längliche Körper (7) mindestens einen inneren leitfähigen Abschnitt (26) und mindestens einen äußeren leitfähigen Abschnitt (25) aufweist.

6. Verbindungsvorrichtung (10) nach einem der Ansprüche 2 oder 4, wobei der Flansch (11) zumindest teilweise in dem länglichen Körper (7) eingekapselt ist.

7. Verbindungsvorrichtung (10) nach einem der vorhergehenden Ansprüche, umfassend einen Stromsensor.

8. Verbindungsvorrichtung (10) nach einem der vorhergehenden Ansprüche, umfassend einen Spannungssensor.

9. Verbindungsvorrichtung (10) nach einem der vorhergehenden Ansprüche, wobei der längliche Körper (7) außen eine Vielzahl von Rippen (17) auf der dem Verbinder (1) gegenüberliegenden Seite aufweist, in der das isolierende Medium Luft ist.

10. Verbindungsvorrichtung (10) nach einem der vorhergehenden Ansprüche, wobei ein Teil des Leiters (5) in elektrischem Kontakt mit mindestens einem leitenden Teil (8) innerhalb des länglichen Körpers (7) steht.

11. Verbindungsvorrichtung (10) nach einem der vorhergehenden Ansprüche, wobei der Leiter (5) durch eine isolierende Hülle (18) geschützt ist.

12. Verbindungsvorrichtung (10) nach einem der vorhergehenden Ansprüche, wobei der Leiter (5) starr ist.

13. Verbindungsvorrichtung (10) nach einem der vorhergehenden Ansprüche, wobei die elektrischen Geräte (3, 6) eine Zelle-Zelle, ein Zelle-Transformator oder Kombinationen davon sein können.

14. Verbindungsvorrichtung (10) nach einem der vorhergehenden Ansprüche, wobei der längliche Körper (7) aus Silikon hergestellt ist.

## Revendications

1. Dispositif de connexion (10) entre des équipements électriques haute tension, applicable entre un premier équipement électrique (3) et un deuxième équipement électrique (6) isolés dans un milieu fluide ou dans un milieu solide, le premier équipement électrique (3) comprenant au moins une douille de couplage femelle (2) en correspondance avec des bornes conductrices (4) du premier équipement électrique de manière que le couplage électrique entre le dispositif de connexion (10) et ledit premier équipement électrique (3) soit réalisé par embrochage, le dispositif de connexion (10) étant indépendant de l'équipement électrique destiné à être couplé, dans lequel le dispositif de connexion (10) comprend :
- un corps allongé (7) constitué d'un matériau isolant et élastique, avec une première extrémité configurée pour être étroitement couplée dans l'au moins une douille de couplage (2) du premier équipement électrique (3),
- un connecteur (1) encapsulé dans le corps allongé (7), en correspondance avec la première extrémité du corps allongé et configuré pour être connecté aux bornes conductrices (4) de la douille de couplage (2), quand la première extrémité du corps allongé est couplée dans l'au moins une douille de couplage femelle (2) du premier équipement électrique (3),
- un conducteur (5) encapsulé au moins partiellement dans le corps allongé (7), ayant une première extrémité qui est connectée au connecteur (1) et une deuxième extrémité adaptée pour connecter le deuxième équipement électrique (6), en établissant au moins un point de connexion aérien (24),
dans lequel le connecteur (1) comprend une pluralité de parties conductrices (8), de manière que la connexion électrique entre lesdites parties conductrices (8) et bornes conductrices (4) soit du type par embrochage, cette connexion électrique étant à l'intérieur du corps allongé (7),
et dans lequel la première extrémité du conducteur (5) est encapsulée à l'intérieur du corps allongé (7) et enfichée dans le connecteur (1), de manière qu'elle soit en contact électrique et entourée par les parties conductrices (8) du connecteur (1) en établissant un deuxième point de connexion électrique à l'intérieur du corps allongé (7) du dispositif de connexion (10).

2. Dispositif de connexion (10) selon la revendication 1, dans lequel le dispositif de connexion (10) comprend au moins une bride (11) pour l'accouplement mécanique entre le premier équipement électrique (3) et le dispositif de connexion (10), la bride (11) mentionnée étant mise à la masse pour permettre la distribution du champ électrique.

3. Dispositif de connexion (10) selon l'une quelconque des revendications précédentes, dans lequel le corps allongé (7) comprend sur sa face intérieure un revêtement conducteur intérieur (15), le revêtement conducteur intérieur (15) mentionné étant appliqué au moins sur la même surface occupée par le connecteur (1) et en contact avec celui-ci.

4. Dispositif de connexion (10) selon la revendication 3, dans lequel le corps allongé (7) comprend sur sa face extérieure le même revêtement conducteur (16), le revêtement conducteur (16) mentionné étant appliqué en partie sur la surface du dispositif de connexion (10), qui est exposée à l'air et à l'extérieur des équipements électriques (3, 6), entre l'ouverture d'entrée de la douille de couplage (2) et au moins une bride mise à la masse (11), ladite bride (11) étant en contact avec ledit revêtement conducteur (16).

5. Dispositif de connexion (10) selon l'une quelconque des revendications précédentes, dans lequel le corps allongé (7) comprend au moins une portion conductrice intérieure (26) et au moins une portion conductrice extérieure (25).

6. Dispositif de connexion (10) selon l'une quelconque des revendications 2 ou 4, dans lequel la bride (11) est au moins partiellement encapsulée dans le corps allongé (7).

7. Dispositif de connexion (10) selon l'une quelconque des revendications précédentes, comprenant un capteur de courant.

8. Dispositif de connexion (10) selon l'une quelconque des revendications précédentes, comprenant un capteur de tension.

9. Dispositif de connexion (10) selon l'une quelconque des revendications précédentes, dans lequel le corps allongé (7) comprend extérieurement une pluralité d'ailettes (17) sur le côté opposé au connecteur (1) dans lequel le milieu isolant est l'air.

10. Dispositif de connexion (10) selon l'une quelconque des revendications précédentes, dans lequel une portion du conducteur (5) est en contact électrique avec au moins une partie conductrice (8) à l'intérieur du corps allongé (7).

11. Dispositif de connexion (10) selon l'une quelconque des revendications précédentes, dans lequel le conducteur (5) est protégé par une enveloppe isolante (18) .

12. Dispositif de connexion (10) selon l'une quelconque des revendications précédentes, dans lequel le conducteur (5) est rigide.

13. Dispositif de connexion (10) selon l'une quelconque des revendications précédentes, dans lequel les équipements électriques (3, 6) peuvent être cellule-cellule, cellule-transformateur ou une combinaison de ceux-ci.

14. Dispositif de connexion (10) selon l'une quelconque des revendications précédentes, dans lequel le corps allongé (7) est constitué de silicone.
